# EUROPEAN PATENT SPECIFICATION

(11) **EP 2 611 683 B1**
(45) Date of publication and mention of the grant of the patent: **11.05.2016**
(21) Application number: 11751666.6
(22) Date of filing: 29.08.2011
(51) Int. Cl.: B62M 6/55, B62M 6/50, B62K 19/34, B62M 9/08, B62M 25/08

(54) **BICYCLE WITH ELECTRIC DRIVE**
FAHRRAD MIT ELEKTROANTRIEB
VÉLO À COMMANDE ÉLECTRIQUE

(30) Priority: 01.09.2010 NL 2005297
(43) Date of publication of application: 10.07.2013
(73) Proprietor: InterGoed B.V., 9206 AD Drachten (NL)
(72) Inventor: SCHUILING, Joop, NL-7451 JK Holten (NL); DE ROOIJ, Theodorus Michiel, NL-7451 JL Holten (NL)
(74) Representative: Van Breda, Jacobus
(86) International application number: PCT/NL2011/050584
(87) International publication number: WO 2012/030213

(56) References cited:
- EP-A1- 1 366 978
- WO-A1-01/73319
- WO-A1-99/11515
- WO-A1-2005/098276
- GB-A- 2 050 270
- GB-A- 2 083 423
- JP-A- 4 358 986
- JP-A- 6 227 475
- JP-U- 49 019 440
- JP-U- 49 019 442
- US-A1- 2006 095 191

## Description

The invention relates to a bicycle with electric drive, the bicycle comprising an electric motor with an driven shaft that through a transmission is coupled to the front chain wheel, a battery and a control that are connected to the electric motor, the control being arranged to control the power fed to the electric motor. A bicycle with electric drive with all the features of the preamble of claim 1 is known from the document GB 2083423 A.

Bicycles with electric drive are increasingly available. The electric drive serves to support the usual drive using the force exerted on the pedals by a rider. In many cases the electric drive is accommodated in the hub of the rear wheel or the front wheel. This however, has the disadvantage that available space is very limited, notably because the hub also accommodates gears and/or the brake. The bicycle hub also often accommodates a dynamo. An additional disadvantage of accommodating a drive in the hub of the front wheel or rear wheel is the unbalance or the unfavourable distribution of the additional weight of the drive motor. Also the possibility of wheel slip exists in the case of a front wheel drive in combination with a slippery/wet surface and a unfavourable load. Cabling to the energy supply is long and difficult to position. Hub motors with a direct drive are often characterized by a low and thus relative unfavourable rotational speed. Certainly starting from a stationary position efficiency of the motor is then low and the energy consumption high.

Also examples are known in which the electric motor and the respective drive (often indirect) are connected to the crank shaft of a bicycle. Also here the available space often poses a problem. Not so much concerning positioning of the electric motor, but more so the transmission of the driven shaft of the electric motor to the crank shaft. When the electric motor is positioned outside the centre of the bicycle, this often results in a larger spacing distance (seen from above) of the pedals. This has ergonomically a negative influence on the cycling comfort.

Also systems are known that use an additional drive wheel, driving the chain. This among others makes the system less compact and requires more construction space which may increase the length of the bicycle, to the detriment of optimal driving behaviour and design of the bicycle.

Positioning the electric motor in a lower position in front of or under the crank shaft exposes the electric motor and respective electrical and mechanical components to damage and contamination.

The presently available bicycles with electric drive have another disadvantage in the control of the amount in which the electric drive supports the drive by muscular force. The support of the electric motor often is switched on the basis of measuring the (rotational) speed of the pedal. This often gives a jerky feeling caused by engaging of the support or by switching on and off of the electric drive. This is felt as unpleasant by the user.

It is an aim of the invention to provide a bicycle with an electric drive that eliminates the mentioned disadvantages of such bicycles according the state of the art and in addition contributes to the riding comfort of the user.

This aim is being fulfilled by a bicycle in which the electric motor is accommodated in the saddle tube. The saddle tube is positioned in the centre of the bicycle and above the centre of the crank shaft. Through this all necessary parts for the drive through the electric motor of the crank shaft can be accommodated, without the crank shaft having to be extended on one side or both sides. This increases the comfort of the cyclist. In addition the electric motor with its corresponding sensitive electrical parts are being protected inside the saddle tube. These parts are thus both protected against mechanical external influences, such as blows and impacts, and also against splashing moist, dirt, mud, etcetera. According to the invention the electronics such as the control has been kept as much as possible outside the drive and is for instance built-in in the saddle tube above the drive. The unit of such is thus rather insensitive to disturbances. It is however also possible that the electronics is accommodated elsewhere in the bicycle for instance as a unit together with the battery.

In a preferred embodiment a bicycle according to the invention the saddle tube comprises a larger diameter in the part where the electric motor is accommodated as compared to the part on the upper side, where the saddle is being mounted. This enables placing an electric motor of reasonable diameter in the saddle tube, without the necessity that the saddle tube has the same large diameter in the vicinity of the saddle, where a larger diameter has no function and could be a possible nuisance. This creates also a larger space in the bottom bracket that is connected to the lower side of the saddle tube. Because there is a transition from the saddle tube to the bottom bracket, this also creates more space in the bottom bracket where for instance parts of the transmissions can be accommodated. By making the attachment of the bottom bracket to the saddle tube detachable, the electric motor can easily be mounted from the lower side in the saddle tube and is also easily dismountable from there. The electric motor and the transmission can then form a unit and this increases the modularity of the system since the electric motor can be replaced as a whole. Also during maintenance that only needs to take place to part of the electric motor, in this way with minimal effort a temporarily new electric motor can be mounted, so that the bicycle is quickly again to the disposition of the user and there is ample time to revise or repair the dismounted unit with electric motor in a suitable workshop.

In a preferred embodiment of the bicycle according to the invention the centre line of the crank shaft lies in front of the centre line of the shaft of the electric motor. This means that the bottom bracket is being positioned slightly to the front with respect to the saddle tube. Such a construction gives a passage from the saddle tube to the bottom bracket that has being formed by a oblique cut of the saddle tube, and is elliptical in shape where the short axis of the ellipse is equal to the diameter of the saddle tube and the long axis is therefore larger. Through this larger passage a larger gear wheel in the transmission from the electric motor to the front chain wheel can be accommodated, without the necessity that this gear wheel is positioned outside the protection of the saddle tube and the bottom bracket.

Preferably the bicycle according to the invention comprises means for determining the torque delivered by the electric motor and the torque sensor for determining the total driving torque delivered to the bicycle. This determines the part of the total driving torque that is being supplied by the electric motor and the part that has been supplied by the user of the bicycle. This enables influencing the torque delivered by the electric motor in dependence of the relation of the power that is being delivered by the electric motor with respect to the power that is delivered by the user. As opposed to a control that is based on the (rotational) speed, with such a control the power delivered by the electric motor can have a smooth development which increases the comfort of the user considerably. The torque delivered by the electric motor can be determined by a torque sensor positioned for example on the driven shaft of the electric motor or at the part of the transmission directly coupled therewith, but it is also possible that other properties are being measured, that have a one to one relationship with the torque delivered by the electric motor. This relationship can for instance be stored in the memory of the control in the shape of electric motor characteristics. An example of these properties could be that signals are being recorded from the motor, that represent for instance motor speed and the electric power consumed by the motor. Together with in dependence of these properties predetermined characteristics of the electric motor, the total delivered torque by the electric motor can be determined. When therefore these signals are being transmitted to the control and the control processes these signals using the characteristics stored in the memory of the control a delivered torque can be determined there from.

The torque sensor for determining a total driving torque delivered to the bicycle can for instance be positioned at the rear fork. However, a torque sensor can also be arranged at another suitable position such as the crank shaft. This enables for instance determination of the torque delivered by the user. Because the torque delivered by the electric motor is measured and hence is known, it is sufficient to measure either the torque delivered by the user or the torque delivered in total. The other of the two can then be calculated.

An operating device gives the user the possibility to influence the electric drive. In addition to an on/off switch, that switches the electric drive on or off, the operating device can also comprise means to adjust the power delivered by the electric motor. Such a setting can take place by a switch with a number of discrete positions, but it can also take place by a continuously varying switch, or by push buttons that relate respectively to increasing or decreasing the set power that is to be delivered by the electric motor.

In one embodiment the bicycle comprises a continuously variable transmission. This enables the selection of the ideal transmission ratio under almost all circumstances. In this respect the pedalling frequency can be limited within a relatively small area. Most users of bicycles have a preference for a certain pedalling frequency. Within one and the same category this frequency does not very to a large extend. This further gives the possibility to adapt the electric motor with the transmissions to this and to dimension these in such a way that the electric motor mostly will function in an area where the motor has a high efficiency. By the combination of a continuously variable transmission and an electric drive in a bicycle the efficiency of the electric motor is being influenced in a very favourable way, so that the reach of the electric support will be increased considerably by this.

The continuously variable transmission can be controlled manually, but can also be controlled by the control of the electric motor. In a advantageous embodiment this control is arranged to control the continuously variable transmission in such a way that as much as possible a constant pedalling frequency is being approximated. This pedalling frequency can for instance be set or adjusted using the operating device, in a similar way as has been described above with respect to setting the power delivered by the electric motor.

The application according to the invention of a controlled continuously variable transmission for controlling the pedalling frequency includes also bicycles with a drive that differ from the electric drive that has been described in the invention.

Now preferred embodiments of a bicycle with electric drive according to the invention will be further explained with reference to the drawings in which:
Fig. 1 is a schematic representation of an example of an embodiment of a bicycle according to the present invention;
Fig. 1a is another view of a part of the bicycle of fig. 1;
Fig. 2 represents a detail of a saddle tube and a bottom bracket from fig.1; and
Fig. 3 represents an exploded view of electric motor and transmission and crank shaft of fig. 1 and 2.

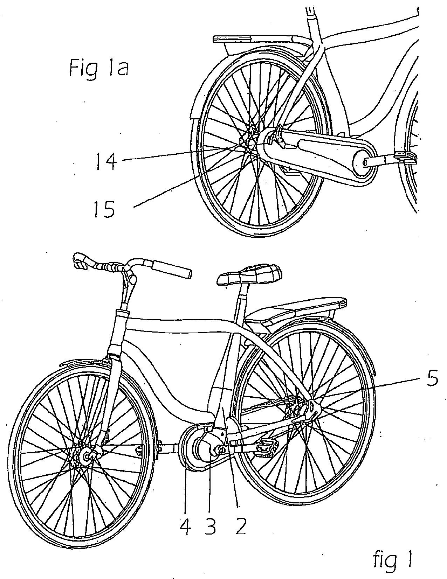

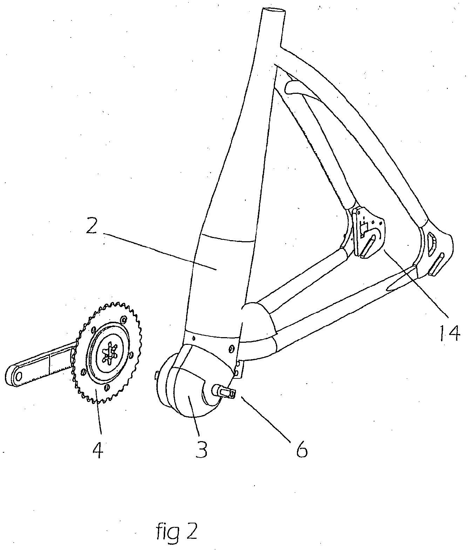

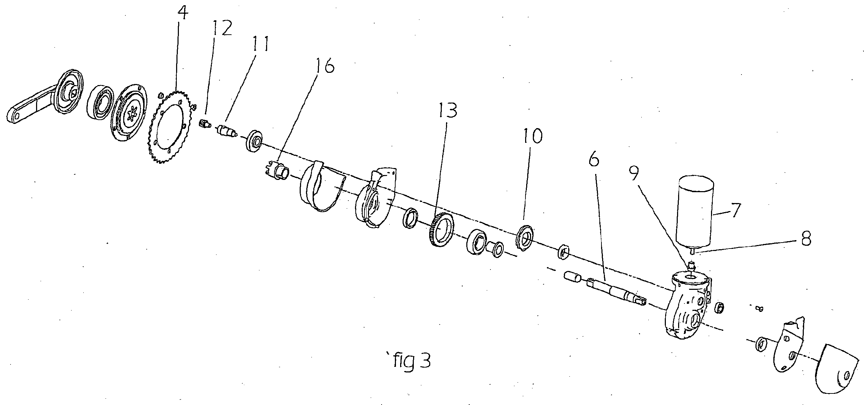

Fig. 1 and 1a show a bicycle 1 with a frame in which a saddle tube 2 can be seen. At the bottom of saddle tube 2 bottom bracket 3 has been attached comprising a crank shaft 6 therein that can transmit a torque from a rider via the front chain wheel 4 and chain 5 to the rear wheel, see also fig. 2. Saddle tube 2 is executed in such a way that saddle tube 2 comprises a larger diameter at the lower end than at the top end. The diameter at the lower end is enlarged so that in the lower side of the saddle tube an electric motor 7 can be accommodated (see Fig. 3). From the lower part, in which electric motor 7 is accommodated, saddle tube 2 tapers upwards to a usual diameter for a saddle tube of a bicycle frame. Electric motor 7, fed by a battery, here not further shown, comprises a driven shaft 8 that by means of a transmission is connected to a coupling element 16. Coupling element 16 is rigidly connected with the front chain wheel 4. The transmission will be further explained below. The bicycle also comprises a display unit where settings and other relevant data are being displayed.

At the lower end of the saddle tube 2 bottom bracket 3 has been attached. Bottom bracket 3 is detachably attached to saddle tube 2. Electric motor 7, in the execution of a compact unit, can therefore be mounted and dismounted from the lower side in saddle tube 2. This makes electric motor 7 well protected against external influences and still is very simply mountable and dismountable.

Bottom bracket 3 is protruding obliquely forwards with respect to the length direction of saddle tube 2. In fig. 1 and also in fig. 2 can be seen that the connections of bottom bracket 3 to saddle tube 2 is elliptic in shape. This elliptical shape is also found in the bottom bracket 3. Because the connecting opening from bottom bracket 3 and saddle tube 2 is an ellipse of which the smaller axis equals the largest internal diameter of the saddle tube 2, the large axis of the elliptical opening is larger than the largest internal diameter of saddle tube 2. This enlarged space is favourable for the transmission of the power delivered by the electric motor from the driven shaft to the coupling element 16.

When electric energy is fed to electric motor 7, driven shaft 8 is being driven and at one end is comprising a hypoid gear wheel 9. Hypoid gear wheel 9 cooperates with hypoid gear wheel 10, that is mounted to an intermediate shaft 11. These hypoid gear wheels 9, 10 transfer the rotation of driven shaft 8 to intermediate shaft 11. Intermediate shaft 11 has a centre line that is perpendicular to the centre line of driven shaft 8. The centre line of intermediate shaft 11 is parallel to the centre line of crank shaft 6. The transfer of the power from intermediate shaft 11 to coupling element 16 is taking care of respectively by gear wheel 12 that is attached to intermediate shaft 11 and gear wheel 13 that is attached to coupling element 16. By this transmission a considerable reduction in rotational speed takes place between driven shaft 8 and coupling element 16, with the accompanying increase of driving torque. For realizing this reduction gear wheel 13 needs to have a relatively large diameter and it is because of the before mentioned oblique positioning of the bottom bracket 3 with respect to the saddle tube 2, that through the elliptical connection opening between these a gear wheel 13 of large diameter can be accommodated.

In the example shown of a bicycle according to the invention in both the transmission of the electric motor 7 to the front chain wheel 4, as in the coupling of the crank shaft 6 with the front chain wheel 4 a so called free wheel is included, of which the functioning in itself is known. Through this it is for example possible that the bicycle is exclusively driven by the electric motor 7 in the described way without the need that the crank shaft rotates, and also the bicycle can be exclusively driven via the crank shaft without the need that the electric motor rotates.

By this construction method, in which the electric motor is placed inside the saddle tube, the electric motor is not only protected against external conditions, but also a location has been obtained for a drive that lies in the heart of the bicycle, so that this does not lead to an extension of the crank shaft. An extended crank shaft does have a negative influence on the user comfort as experienced by the user of the bicycle. By this construction a compact transmission can be maintained so that this results in a crank shaft of which the dimensions are determined by the ergonomics of the user and not by the transmission.

At the rear fork a torque sensor 14 has been attached. This torque sensor 14 measures the total torque that is exerted. Because the power delivered by the motor is also determined based on the electricity consumption measured and the speed, it is possible to continuously calculate which part is generated by the rider.

Positioning of a torque sensor 14 in this embodiment is at the rear fork, but the position is not limited to this and not essential for the invention. The torque sensor 14 could also have been attached to the crank shaft or at another suitable position.

The presence of the torque sensor 14 enables controlling the contribution to the total drive torque that is delivered by the electric motor 7, for instance in dependence of a set value, set by means of an operating device.

In the hub of the rear wheel, in the shown example of a bicycle according to the invention, a continuously variable transmission (CVT) 15 has been placed. The CVT 15 (of which the operation in itself is known) is operated by the control and makes it possible to ride with a fixed - to be set - pedalling frequency, which results in a fixed ingoing rotational speed for the CVT 15. The CVT 15 is controllable such that it sets a transmission ratio in such a way that with each speed this ingoing rotational speed remains constant. Also with lower speed, even from "getting started". This at the same time means that the electric motor can function in a favourable rotational speed. Particularly with getting started and at lower speeds, in other, manually shifted configurations, a lot of energy is being used without delivering efficient support, because of the poor efficiency at the lower rotational speeds. At higher riding speeds also the set pedalling frequency is maintained. This gives an "effect" that the bicycle is ridden with a relatively low pedalling frequency in relation to the high bicycle speed.

A much more favourable reach can be expected with a bicycle that has been fitted with a CVT.

In this example of an embodiment of the invention the CVT comprises an electrically driven setting possibility. This gives several possibilities to install specific rider profiles in the control and to control the CVT accordingly. For instance the pedalling frequency can controlled be varied with the speed that is ridden.

### List of reference numbers

- 1: Bicycle
- 2: Saddle tube
- 3: Bottom bracket
- 4: Front chain wheel
- 5: Chain
- 6: Crank shaft
- 7: Electric motor
- 8: Driven shaft
- 9: Hypoid gear wheel
- 10: Hypoid gear wheel
- 11: Intermediate shaft
- 12: Gear wheel on intermediate shaft
- 13: Gear wheel on crank shaft
- 14: Torque sensor
- 15: Continuously variable transmission
- 16: Coupling element

## Claims

1. Bicycle (1) with electric drive, the bicycle com prising:
a frame with a saddle tube (2) and a rear fork, a front wheel and a rear wheel, a crank shaft (6) in a bottom bracket (3) that is connected with the lower side of the saddle tube (2), a pedal at each end of the crank shaft (6), the crank shaft (6) and the rear wheel being coupled to each other by a front (4) and a rear chain wheel that mutually are connected by a chain (5),
an electric motor (7) with a driven shaft (8) that by means of a transmission has been coupled to front chain wheel (4) and a battery and a control that are connected with the electric motor (7), the control being arranged for controlling the power fed to the electric motor,
the electric motor (7) being accommodated inside the saddle tube (2), **characterized in that** the bottom bracket (3) is detachably attached to the saddle tube (2) and the electric motor (7) is mountable via the lower side in the saddle tube (2) and dismountable from there.

2. Bicycle (1) with electric drive according to claim 1, **characterized in that** the saddle tube (2) towards the lower part widens to a larger diameter for accommodating the electric motor (7).

3. Bicycle (1) with electric drive according to one of the claims 1 and 2, **characterized in that** the centre line of the crank shaft (6) lies in front of the centre line of the shaft (8) of the electric motor (7).

4. Bicycle (1) with electric drive according to one of the claims 1 to 3, **characterized in that** the bicycle comprises means for determining the torque delivered by the electric motor and a torque sensor (14) for determining the total driving torque delivered to the bicycle.

5. Bicycle (1) with electric drive according to claim **4, characterized in that** the torque delivered by the electric motor (7) is determined by processing of one or more signals recorded from the motor together with characteristics of the electric motor (7) that have been stored in the control.

6. Bicycle (1) with electric drive according to claim 5, **characterized in that** the signals recorded from the motor relay to the motor speed and to the electric power consumed by the electric motor (7).

7. Bicycle (1) with electric drive according to one of the claims 4 to 6, **characterized in that** the torque sensor (14) is located at the rear fork.

8. Bicycle (1) with electric drive according to one of the claims 4 to 6, **characterized in that** the torque sensor is located at the crank shaft (6).

9. Bicycle (1) with electric drive according to one of the claims 1 to 8, **characterized in that** the control is connected with a operating device that is arranged for setting the power delivered by the electric motor.

10. Bicycle (1) with electric drive according to one of the claims 1 to 9, **characterized in that** the bicycle comprises a continuously variable transmission (15).

11. Bicycle (1) with electric drive according to claim 10, **characterized in that** the continuously variable transmission (15) is attached to the rear wheel.

12. Bicycle (1) with electric drive according to one of the claims 10 or 11, **characterized in that** the continuously variable transmission (15) is controlled by the control.

13. Bicycle (1) with electric drive according to claim 12, **characterized in that** the control is arranged to control the continuously variable transmission (15) to an essentially constant pedalling frequency.

14. Bicycle (1) with electric drive according to claim 12, **characterized in that** the control has been arranged to control the continuously variable transmission (15) to a speed dependable profile of the pedalling frequency.

15. Bicycle (1) with electric drive according to claims 13 or 14, **characterized in that** the operating device is arranged for setting the pedalling frequency and or the profile of the pedalling frequency.

## Patentansprüche

1. Fahrrad (1) mit elektrischem Antrieb, wobei das Fahrrad Folgendes umfasst:
einen Rahmen mit einem Sattelrohr (2) und einer hinteren Gabel, ein Vorderrad und ein Hinterrad, eine Kurbelwelle (6) in einem Tretlager (3), das mit der unteren Seite des Sattelrohrs (2) verbunden ist, ein Pedal an jedem Ende der Kurbelwelle (6), wobei die Kurbelwelle (6) und das Hinterrad miteinander durch ein vorderes (4) und ein hinteres Kettenrad verkoppelt sind, die gegenseitig durch eine Kette (5) verbunden sind, einen Elektromotor (7) mit einer angetriebenen Welle (8), die durch ein Getriebe mit dem vorderen Kettenrad (4) verkoppelt ist, und eine Batterie und eine Steuervorrichtung, die mit dem Elektromotor (7) verbunden sind, wobei die Steuervorrichtung zum Regulieren der dem Elektromotor zugeführten Leistung angeordnet ist,
wobei der Elektromotor (7) innerhalb des Sattelrohrs (2) untergebracht ist, **dadurch gekennzeichnet, dass** das Tretlager (3) entfernbar an dem Sattelrohr (2) befestigt ist und der Elektromotor (7) über die untere Seite im Sattelrohr (2) montierbar und von dort abnehmbar ist.

2. Fahrrad (1) mit elektrischem Antrieb nach Anspruch 1, **dadurch gekennzeichnet, dass** das Sattelrohr (2) sich auf das untere Teil zu zu einem größeren Durchmesser zum Unterbringen des Elektromotors (7) erweitert.

3. Fahrrad (1) mit elektrischem Antrieb nach einem der Ansprüche 1 und 2, **dadurch gekennzeichnet, dass** die Mittellinie der Kurbelwelle (6) vor der Mittellinie der Welle (8) des Elektromotors (7) liegt.

4. Fahrrad (1) mit elektrischem Antrieb nach einem der Ansprüche 1 bis 3, **dadurch gekennzeichnet, dass** das Fahrrad eine Vorrichtung zum Bestimmen des vom Elektromotor gelieferten Drehmoments und einen Drehmomentsensor (14) zum Bestimmen des gesamten, dem Fahrrad gelieferten Antriebsdrehmoments umfasst.

5. Fahrrad (1) mit elektrischem Antrieb nach Anspruch 4, **dadurch gekennzeichnet, dass** das durch den Elektromotor (7) gelieferte Drehmoment durch Verarbeiten eines oder mehrere Signale, die aus dem Motor erfasst worden sind, zusammen mit Charakteristiken des Elektromotors (7), die in der Steuervorrichtung gespeichert worden sind, bestimmt wird.

6. Fahrrad (1) mit elektrischem Antrieb nach Anspruch 5, **dadurch gekennzeichnet, dass** die aus dem Motor erfassten Signale an die Motorgeschwindigkeit und die von dem Elektromotor verbrauchte elektrische Leistung (7) übertragen werden.

7. Fahrrad (1) mit elektrischem Antrieb nach einem der Ansprüche 4 bis 6, **dadurch gekennzeichnet, dass** der Drehmomentsensor (14) sich in der hinteren Gabel befindet.

8. Fahrrad (1) mit elektrischem Antrieb nach einem der Ansprüche 4 bis 6, **dadurch gekennzeichnet, dass** der Drehmomentsensor sich in der Kurbelwelle (6) befindet.

9. Fahrrad (1) mit elektrischem Antrieb nach einem der Ansprüche 1 bis 8, **dadurch gekennzeichnet, dass** die Steuervorrichtung mit einer Bedienungsvorrichtung verbunden ist, die zum Einstellen der durch den Elektromotor gelieferten Leistung angeordnet ist.

10. Fahrrad (1) mit elektrischem Antrieb nach einem der Ansprüche 1 bis 9, **dadurch gekennzeichnet, dass** das Fahrrad ein stufenloses Getriebe (15) umfasst.

11. Fahrrad (1) mit elektrischem Antrieb nach Anspruch 10, **dadurch gekennzeichnet, dass** das stufenlose Getriebe (15) am Hinterrad befestigt ist.

12. Fahrrad (1) mit elektrischem Antrieb nach einem der Ansprüche 10 oder 11, **dadurch gekennzeichnet, dass** das stufenlose Getriebe (15) durch die Steuervorrichtung reguliert wird.

13. Fahrrad (1) mit elektrischem Antrieb nach Anspruch 12, **dadurch gekennzeichnet, dass** die Steuervorrichtung zum Regulieren des stufenlosen Getriebes (15) auf eine im Wesentlichen konstante Radelgeschwindigkeit angeordnet ist.

14. Fahrrad (1) mit elektrischem Antrieb nach Anspruch 12, **dadurch gekennzeichnet, dass** die Steuervorrichtung zum Regulieren des stufenlosen Getriebes (15) einem geschwindigkeitsverlässlichen Profils der Radelgeschwindigkeit entsprechend angeordnet ist.

15. Fahrrad (1) mit elektrischem Antrieb nach den Ansprüchen 13 oder 14, **dadurch gekennzeichnet, dass** die Betriebsvorrichtung zum Einstellen der Radelgeschwindigkeit und oder des Profils der Radelgeschwindigkeit angeordnet ist.

## Revendications

1. Vélo (1) à entraînement électrique, le vélo comprenant :
un cadre ayant un tube de selle (2) et une fourche arrière, une roue avant et une roue arrière, un vilebrequin (6) dans un boîtier de pédalier (3) qui est relié au côté inférieur du tube de selle (2), une pédale à chaque extrémité du vilebrequin (6), le vilebrequin (6) et la roue arrière étant couplés l'un(e) à l'autre par des plateaux de pédalier avant (4) et arrière qui sont mutuellement reliés par une chaîne (5),
un moteur électrique (7) ayant un arbre entraîné (8) qui au moyen d'une transmission a été couplé au plateau de pédalier avant (4) et une batterie et une unité de commande qui sont reliées au moteur électrique (7), l'unité de commande étant agencée pour commander la puissance fournie au moteur électrique,
le moteur électrique (7) étant reçu à l'intérieur du tube de selle (2), **caractérisé en ce que** le boîtier de pédalier (3) est fixé de manière amovible au tube de selle (2) et le moteur électrique (7) peut être monté par l'intermédiaire du côté inférieur dans le tube de selle (2) et peut être démonté de celui-ci.

2. Vélo (1) à entraînement électrique selon la revendication 1, **caractérisé en ce que** le tube de selle (2) s'élargit à un plus grand diamètre vers la partie inférieure pour recevoir le moteur électrique (7).

3. Vélo (1) à entraînement électrique selon l'une des revendications 1 et 2, **caractérisé en ce que** la ligne centrale du vilebrequin (6) se trouve en face de la ligne centrale de l'arbre (8) du moteur électrique (7).

4. Vélo (1) à entraînement électrique selon l'une des revendications 1 à 3, **caractérisé en ce que** le vélo comprend un moyen pour déterminer le couple fourni par le moteur électrique et un capteur de couple (14) pour déterminer le couple d'entraînement total fourni au vélo.

5. Vélo (1) à entraînement électrique selon la revendication 4, **caractérisé en ce que** le couple fourni par le moteur électrique (7) est déterminé par traitement d'un signal ou de plusieurs signaux enregistré(s) à partir du moteur conjointement avec des caractéristiques du moteur électrique (7) qui ont été stockées dans l'unité de commande.

6. Vélo (1) à entraînement électrique selon la revendication 5, **caractérisé en ce que** les signaux enregistrés à partir du moteur sont liés à la vitesse du moteur et à la puissance électrique consommée par le moteur électrique (7).

7. Vélo (1) à entraînement électrique selon l'une quelconque des revendications 4 à 6, **caractérisé en ce que** le capteur de couple (14) est situé au niveau de la fourche arrière.

8. Vélo (1) à entraînement électrique selon l'une des revendications 4 à 6, **caractérisé en ce que** le capteur de couple est situé au niveau du vilebrequin (6).

9. Vélo (1) à entraînement électrique selon l'une des revendications 1 à 8, **caractérisé en ce que** l'unité de commande est reliée à un dispositif d'actionnement qui est agencé pour régler la puissance fournie par le moteur électrique.

10. Vélo (1) à entraînement électrique selon l'une des revendications 1 à 9, **caractérisé en ce que** le vélo comprend une transmission à variation continue (15).

11. Vélo (1) à entraînement électrique selon la revendication 10, **caractérisé en ce que** la transmission à variation continue (15) est fixée à la roue arrière.

12. Vélo (1) à entraînement électrique selon l'une des revendications 10 et 11, **caractérisé en ce que** la transmission à variation continue (15) est commandée par l'unité de commande.

13. Vélo (1) à entraînement électrique selon la revendication 12, **caractérisé en ce que** l'unité de commande est agencée pour commander la transmission à variation continue (15) à une fréquence de pédalage essentiellement constante.

14. Vélo (1) à entraînement électrique selon la revendication 12, **caractérisé en ce que** l'unité de commande a été agencée pour commander la transmission à variation continue (15) à un profil dépendant de la vitesse de la fréquence de pédalage.

15. Vélo (1) à entraînement électrique selon les revendications 13 ou 14, **caractérisé en ce que** le dispositif d'actionnement est agencé pour régler la fréquence de pédalage et/ou le profil de la fréquence de pédalage.
